Europäisches Patentamt

European Patent Office

Office européen des brevets

(19)

(11) Veröffentlichungsnummer: **0 140 277**
**B1**

(12) **EUROPÄISCHE PATENTSCHRIFT**

(45) Veröffentlichungstag der Patentschrift: **13.06.90**

(51) Int. Cl.⁵: **H 02 G 3/04, H 02 G 3/28**

(21) Anmeldenummer: **84112514.9**

(22) Anmeldetag: **17.10.84**

(54) **Anordnung elektrischer Kabel in einem Schiff.**

(30) Priorität: **22.10.83 DE 3338471**

(43) Veröffentlichungstag der Anmeldung:
**08.05.85 Patentblatt 85/19**

(45) Bekanntmachung des Hinweises auf die
Patenterteilung:
**13.06.90 Patentblatt 90/24**

(84) Benannte Vertragsstaaten:
**DE FR GB IT NL**

(56) Entgegenhaltungen:
**DE-U-7 541 624**
**DE-U-7 905 824**
**US-A-4 093 818**

**BBC NACHRICHTEN, Band 41, Nr. 3/4,
März/April 1959, Seiten 148-158, Hauszeitschrift
der Brown, Boveri & Cie. AG, Mannheim, DE; C.
BAUER: "Neuzeitliche elektrische Installation
auf Seeschiffen"**

(73) Patentinhaber: **HOWALDTSWERKE-DEUTSCHE
WERFT AG
Werftstrasse 112-114 Postfach 14 63 09
D-2300 Kiel 14 (DE)**

(72) Erfinder: **Sokolowski, Reinhold, Dipl.-Ing.
Schrevenborner Weg 9
D-2305 Heikendorf (DE)**

(74) Vertreter: **Rosencrantz, Rolf, Dr. et al
c/o Howaldtswerke - Deutsche Werft AG
Werftstrasse 112-114 Postfach 14 63 09
D-2300 Kiel 14 (DE)**

EP 0 140 277 B1

**Beschreibung**

Die Erfindung bezieht sich auf eine Anordnung elektrischer Kabel in einem Schiff, insbesondere auf die Anordnung einer Kabelbahn in einem Raum oder einer Sektion zwischen wasserdichten Wänden, wie z. B. Schottwänden.

Eine wasserdichte Schottdurchführung für eine Anzahl paralleler Kabel ist in DE—U1—79 05 824 gezeigt. In DE—U1—75 41 624 wird eine Deck- oder Schottdurchführung beschrieben, bei der die durch das Schott zu führenden Kabel in einem das Schott durchdringenden Gehäuse mit einer druck- und feuerfesten Vergußmasse abgedichtet angeordnet sind.

Es ist allgemein üblich, eine Vielzahl unterschiedlicher elektrischer Kabel in einer Kabelbahn zusammenzufassen. Bei Schiffen werden solche Kabelbahnen möglichst hoch, beispielsweise an der Decke der jeweiligen Räume angeordnet, und einzelne Kabel zweigen an geeigneten Stellen von der Kabelbahn zu den Stromerzeugern, Verbrauchern oder sonstigen Geräten ab. Dabei liegen die Kabelbahnen häufig nahe an der Außenhaut. Bei bestimmten Schiffen werden zur Erhöhung der Sicherheit wichtige Kabel an beiden Seiten des Schiffs oberhalb der Wasserlinie in den Räumen angeordnet, damit wichtige Aggregate des Schiffes bei einer Beschädigung an einer Seite z. B. durch eine Kollision noch mit Hilfe der Kabel der anderen Seite funktionsfähig bleiben. Derartige, vor allem bei Schiffen mit zwei oder mehr wasserdicht getrennten Räumen mit Maschinen o.ä. verwendete Kabelbahnen besitzen verschiedene Nachteile. Ein Teil der Kabel ist doppelt vorhanden; doppelte Kabelbahnen bieten aber nur eine Sicherheit, wenn nicht gpeichzeitig an beiden Schiffsseiten ein Schaden auftritt, was jedoch bei einem Brand in dem Raum nicht auszuschließen ist. Unter der Decke des Raumes liegende Kabelbahnen sind schwer zugänglich, wenn Kabel ausgewechselt werden müssen. Die oben und außen liegenden Kabelbahnen stören, wenn für den Austausch von Aggregaten die Bordwand geöffnet wird.

Der Erfindung liegt daher die Aufgabe zugrunde, eine eine Vielzahl von Kabeln enthaltende Kabelbahn und die aus ihr abzweigenden Kabel in einer die vorstehenden Nachteile vermeidenden, aber die Sicherheit erhöhenden Weise anzuordnen.

Diese.Aufgabe wird dadurch gelöst, daß wenigstens eine Kabelbahn, welche einen wasserdicht abgeteilten Raum bzw. eine Schiffssektion zwischen Schottwänden durchlaufende Kabel zusammenfaßt, in einem trogförmigen, abgedeckten Kanal, der auf dem Koppelboden abgestützt ist, angeordnet ist. Der Kanal ist vorzugsweise auf Stützen mit geringem Abstand zur oberen Seite des Doppelbodens angebracht. Der Abstand zum Doppelboden läßt zu, daß sich in dem Raum sammelndes Wasser oder Öl in die Bilge oder zu Lenzbrunnen fließen kann. In den meisten Fällen ist ein einziger Kanal, der sich etwa in der Mitte des Schiffes befindet, ausreichend.

Von diesem Kanal zweigen nur an den Enden, insbesondere also an den Schottwänden, die Kabel ab, die zur Energieversorgung und zur Steuerung der Maschinen und Geräte in dem Raum beziehungsweiఀe der Sektion notwendig sind. Diese Leitung werden an den Wänden zunächst aufsteigend verlegt und dann in geeigneter Weise, beispielsweise auch von der Decke des Raumes herab, an die Maschinen geführt. Die notwendigen Durchgänge der Weiterführenden Kabel durch die Schottwände in benachbarte Räume werden in bekannter Weise wasserdicht vorgossen. Es ist zweckmäßig, auch die Enden des Kanals an den Schottwänden wasserdicht abzuschließen oder zu vergießen, um das Eindringen von Flüssigkeiten un Schmutz entlang der abzweigenden Leitungen zu verhindern und dort an den Kabeln möglicherweise vorhandene Verteiler oder Abzweige zu schützen.

Der trogförmige Kanal umgibt die in ihm im wesentlichen geradlinig eingelegten Kabel, die zusammen eine Kabelbahn bilden, und schützt sie gegen mechanische Beschädigungen. Der Kanal kann Einrichtungen enthalten, die einzelne Kabelstränge oder- gruppen von anderen trennen. Er ist an seiner oberen Seite durch ein oder mehrere lösbare Platten abgedeckt, die schlag- und trittfest sind. Nach dem Abnehmen der Platten sind die Kabel leicht zugänglich. Gegebenenfalls können auch Seitenteile des Kanals abnehmbar sei, um von der Seite her an die Kabel kommen zu können.

Die Kabel sind infolge der elektrischen Isolierung ausreichend wasserfest, und die Abschlüsse der Kanalenden Schützen in Verbindung mit den Schottwänden auch etwa dort vorhandene Kabelverbindungen und -abzweige. Es ist daher nicht notwendig, daß der trogförmige Kanal selbst wasserdicht ist bzw. nach einem etwa am Schiff eingetretenen Schaden vollständig wasserdicht bleibt. Nach einer bevorzugten Ausführung wird daher der Kanal Öffnungen in seinen seitlichen Wänden ausgeführt, durch die Luft zirkulieren kann, um die möglicherweise an den Kabeln entstehende Wärme abzuführen. Nach einer anderen Ausführung ist der Kanal wasserdicht ausgebildet und durch die lösbaren oberen Platten auch dicht verschlossen, um das Eindringen von Wasser, Öl und Verschmutzungen, die für die Kabelisolierung nachteilig sein könnten, zu verhindern. Für einen solchen abgedichteten Kanal ist eine Zwangsbelüftung zweckmäßig. An den Schottwänden werden daher etwa vertikale Luftleitungen zu dem Kanal vorgesehen, aus denen ein Luftstrom durch die Hohlräume über und zwischen den Kabeln zirkuliert, um gegebenenfalls Wärme und Kondenswasser abzuleiten. Die Luftleitungen können mit der Klimaanlage des Schiffes verbunden sein und sind in dem Raum so angelegt, daß Spritzwasser nicht in sie gelangen kann.

Durch die erfindungsgemäße Anordnung einer Kabelbahn in einem Kanal oberhalb des Doppelbodens befinden sich die Kabel an der Stelle des Schiffsquerschnitts, an der die geringste Gefahr eine Beschädigung besteht. Ein Wassereinbruch kann die den Raum durchlaufenden Kabel nicht außer Betrieb setzen. Im Falle eines Brandes in dem Raum können die Kabel sogar durch teilweises Fluten geschützt werden, wobei es ein Vorteil ist, daß die Kabelbahn unterhalb der Wasserlinie angeordnet ist. Es ist daher nicht notwendig, gewisse wichtige Kabel zur sicherheit doppelt zu verlegen. Außerdem wird die Zugänglichkeit der Kabelbahn verbessert, was für das Auswechseln von Kabeln oder das Nachrüsten mit weiteren Kabeln ebenso vorteilhaft ist wie für die Montage beim Bau des Schiffes. Die Erfindung ist besonders günstig für Schiffe, bei denen Energieerzeuger, Antriebsmaschinen und Apparate auf mehrerer Räume verteilt sind, so daß beim Ausfall der Maschinen eines Raumes noch ein beschränkter Betrieb mit den Einrichtungen der anderen Räume möglich ist.

Ein Ausführungsbeispiel wird anhand der beigefügten, schematischen Zeichnungen beschrieben, die Nicht maßstäblich sind und den Kabelkanal stark vergrößert darstellen.

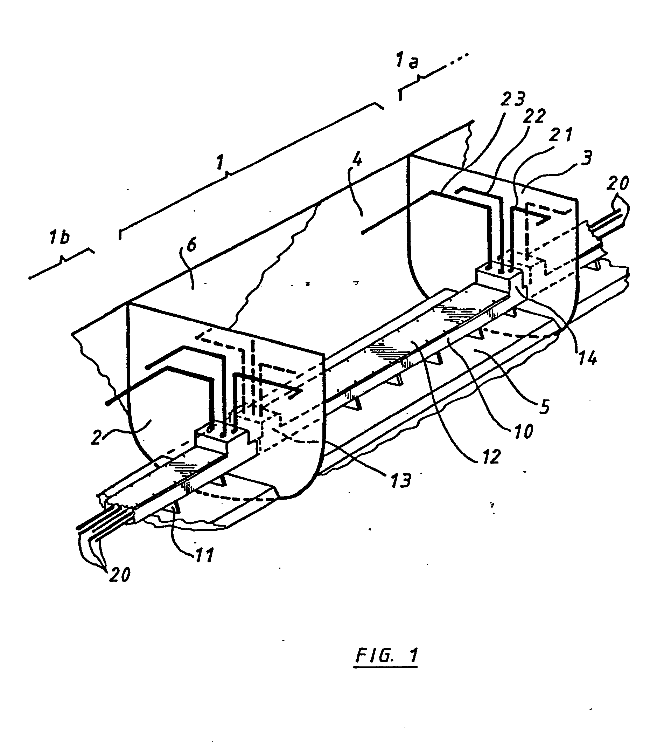

Es zeigen Figur 1 eine zwischen zwei Schottwänden befindliche Schiffssektion für einen Maschinenraum in perspektivischer Ansicht,

Figur 2 einen Querschitt durch einen Schiffsrumpf,

Figur 3 einen Längsschnitt durch einen Teil eines Schiffsrumpfes.

Die in Figur 1 dargestellte Sektion 1 erstreckt sich in Längsrichtung des Schiffes von einer Schottwand 2 zu einer anderen Schottwand 3 und ist seitlich durch die Außenhaut 4 sowie nach unten durch den Doppelboden 5 begrenzt und wird oben durch ein Deck 6 abgeschlossen. Auf den anderen Seiten der Schottwände 2 und 3 befinden sich weitere Schiffsräume oder Sektionen 1a, 1b, die Hilfsmaschinen, eine zweite Antriebsmachine, Pumpen, Vorräte usw. enthalten können. Die Maschinen und die Aggregate sind auf den Zeichnungen nicht dargestellt.

Ein trogförmiger Kabelkanal 10 von etwa rechteckigem Querschnitt verläuft oberhalb des Doppelbodens 5 und wird durch Ständer 11 auf ihm mit geringem Abstand abgestützt Der Kanal 10 ist oben durch eine fest Platte 12 verschlossen. In dem Kanal 10 befinden sich die die Sektion 1 durchlaufenden Kabel 20, die die beiden benachbarten Sektionen miteinander und mit den Maschinen in der Sektion 1 verbinden un gegebenenfalls auch zwei Maschinen des Raumes 1 verbinden. An den Enden der Sektionen zweigen einzelne Kabel 21, 22, 23 von der Gruppe der Kabel 20 ab und steigen etwa vertikal auf, wobei sie vorzugsweise an einer Schottwand 2, 3 befestigt sind, und werden dann in geeigneter Weise an nicht dargestellte Maschinen und Geräte in dem Raum der sektion 1 oder in nicht gezeigt Räume der Aufbauten über der Sektion 1 geführt. Die Kabelbahn oder die Gruppe der Kabel 20 stellt somit das elektrische Rückgrat des Schiffes dar, von dem abzweigende Kabel wie z. B. 21, 22, 23 wie Rippen ausgehen.

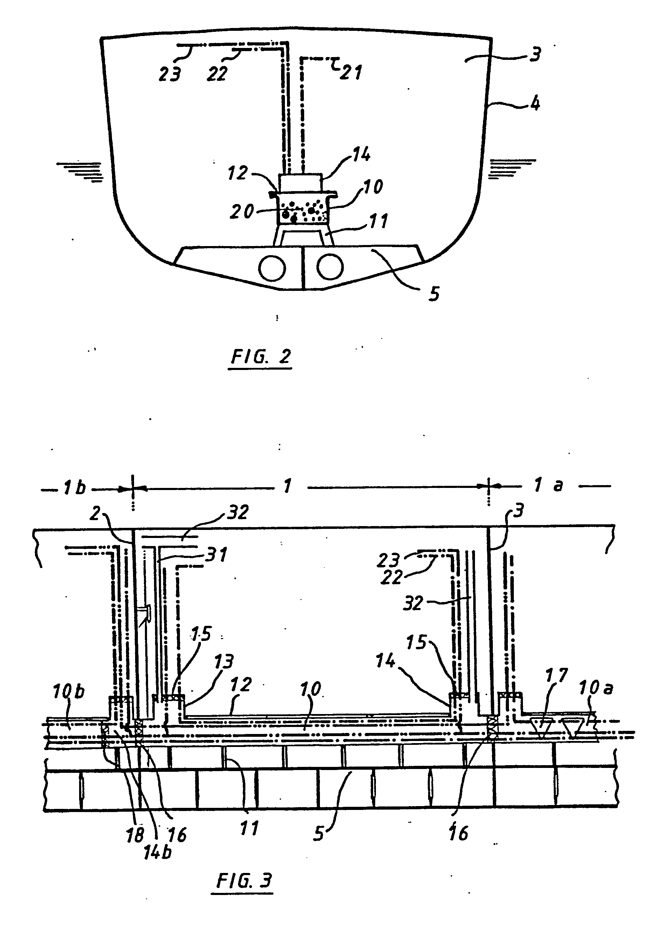

Der Kanal 10 hat einer verhältnismäßig geringe Höne, so daß er gegebenenfalls in der Ebene der unteren Gräting oder sogar unter ihr angeordnet werden kann. Die Kanalenden 13, 14 sind jedoch etwas höher und in ihnen können Anschlüsse, Abzweige und Verteiler untergebracht werden. Die Ausgänge aus den Enden 13, 14 nach oben werden zweckmässigerweise durch Einbringen einer Vergüßmasse 15, wie in Figur 3 angedeutet, wasserdicht verschlossen. Ein wasserdichter Abschluß erfolgt auch durch die Verfußmasse 16 an den Schottwänden, damit diese trotz der durch sie verlaufenden Kabel 20 wasserdichte Trennwände bleiben.

Die Enden 13, 14 der Kanäle 10 befinden sich möglichst unmittelbar an den Schottwänden 2, 3, so daß die etwa in der Mitte aufsteigenden Kabel 21, 22, 23 noch an ihnen befestigt werden können und durch die Schottwände geschützt werden. Sofern an einer Schottwand Steifen und Träger angeordnet sind, laufen die Kabel in einem hierdurch gegebenen Abstand. In den Figuren 2 und 3 sind einige aus der Vielzahl der Kabel zur Verdeutlichung mit strichpunktierten Linien angedeutet.

Auf die Vergußmasse 15 kann gegebenenfalls verzichtet werden, wenn in einem Kanalende 13, 14 keine gegen Wasser empfindlichen Verteiler o.ä. vorgesehen sind und der Kanal 10 selbst auch nicht wasserdicht ausgeführt und zur Abgabe auftretender Erwärmung sogar noch mit seitlichen und/oder unteren Öffnungen 17 versehen ist, wie der Kanal 10a in der Sektion 1a der Figur 3. Bei einem Kanal 10, der in einem Ende 13, 14 vor Feuchtigkeit oder bei einem Schaden vor eintretendem Wasser zu schützende Verteiler o.ä enthält und/oder durch einem im allgemeinen trockenen Raum verläuft, kann eine Vergußmasse 18 zwischen dem Abgedichteten Kanalende 14b und dem übrigen nicht wasserdicht ausgeführten Kanal 10b eingebracht werden, wie in Sektion 1b der Figur 3.

Wenn der Kabelkanal 10 einschließlich seiner Kanalenden 13, 14 in einer Sektion 1 dicht verschlossen ist, ist es vorteilhaft, Luftzu- und -ableitungen 31, 32 vorzusehen, die an den Schottwänden 2, 3 nach oben hochgezogen sind und von denen eine mit einem Zuluftkanal 33 beispielsweise der Raumbelüftung verbunden ist. Die Luftleitungen 31, 32 sind so ausgebildet und mit dem Kanal 10 verbunden, daß auch bei einem teilweisen Fluten des Raumes noch kein Wasser in den Kanal 10 eindringen kann.

Wenn auch ein geradliniger, in der Schiffsmitte verlaufender Kanal 10 bevorzugt wird, so ist jedoch auch eine außermittige oder Bögen bzw. Winkel ergebende Anordnung auf der Oberseite des Doppelbodens möglich, um Machinenfundamenten, Wellenleitungen und anderen gegebenenfalls in der Schiffsmitte anzuordnenden Einrichtung auszuweichen. Der Kanal 10 kann auch ganz oder stellenweise in einer grabenartigen, lenzbaren Vertiefung der Oberseite des Doppelbodens untergebracht werden, sofern dies erforderlich sein sollte.

Die erfindungsgemäß geschützte Anordnung einer Kabelbahn auf dem Doppelboden mit Abzweigen an den Schottwänden schafft eine hohe Sicherheit gegen mechanische Beschädigungen der Kabel, die die Sicherheit des Schiffes verbessert, auch ohne daß wichtige Kabel doppelt vorhanden wären. Dies vermindert die Kosten für Material und Verlegung der Kabel. Die Anordnung kann beispielsweise bei Passagier- und Fährschiffen eingesetzt werden, bei denen auch bei Ausfall einer wasserdicht abgeteilten Schiffssektion bzw. eines Raumes Feuerlöscheinrichtungen und Pumpen der anderen Sektionen sowie auch weitere Einrichtungen für den Schiffsbetrieß funktionsfähig bleiben müssen.

**Patentansprüche**

1. Anordnung elektrischer Kabel in einem Schiff, wobei die in einer Sektion (1, 1a, 1b) des Schiffes zwischen zwei Schottwänden (2, 3) verlaufenden Kabel in Kabelbahnen zusammengefaßt und die Durchgänge der Kabelbahn (20) durch die Schottwände wasserdicht verschlossen sind, dadurch gekennzeichnet, daß wenigstens eine eine Vielzahl von Kabeln umfassende Kabelbahn (20) in einem trogförmigen, abgedeckten Kanal (10), der auf dem Doppelboden abgestützt ist, zwischen den Schottwänden (2, 3) der Sektion (1) angeordnet ist und an den Schottwänden (2, 3) verteilte Leitungen (21, 22, 23) aus dem Kanalenden (13, 14) aufsteigend zu den Maschinen und Geräten der Sektion (1) verlaufen.

2. Kabelanordnung nach Anspruch 1, dadurch gekennzeichnet, daß ein einziger, trogförmiger Kanal (10) für die Kabelbahn (20) etwa in der Mitte des Schiffes angeordnet ist.

3. Kabelanordnung nach Anspruch 1 oder 2, dadurch gekennzeichnet, daß der Kanal (10) durch schlag- und trittfeste, lösbare Platten (12) an seiner oberen Seite abgedeckt ist.

4. Kabelanordnung nach einem der Ansprüche 1 bis 3, dadurch gekennzeichnet, daß die Ausgänge der abzweigenden, verteilenden Leitungen (21, 22, 23) an den Kanalenden (13, 14) wasserdicht verschlossen sind.

5. Kabelanordnung nach Anspruch 4, dadurch gekennzeichnet, daß die Kanalenden (14b) mittels einer eingebrachten Vergüßmasse (18) gegen den Kanal (10, 10b) wasserdicht abgeschlossen sind.

6. Kabelanordnung nach Anspruch 4 oder 5, dadurch gekennzeichnet, daß die Seiten des Kanals (10, 10a) Öffnungen (17) aufweisen.

7. Kabelanordnung nach einem der Ansprüche 1 bis 4, dadurch gekennzeichnet, daß der Kanal (19) mit den Kanalenden (13, 14) wasserdicht ausgeführt und durch die lösbaren Platten (12) wasserdicht verschlossen ist.

8. Kabelanordnung nach Anspruch 7, dadurch gekennzeichnet, daß der wasserdicht abgeschlossene Kanal (10) wenigstens einen durchgehenden Hohlraum über oder zwischen den Kabeln der Kabelbahn (20) enthält und an den Schottwänden (2, 3) Luftleitungen (31, 32) für eine Zirkulation von Luft durch den Kanal (10) zum Abführen von Wärme von den Kabeln angeordnet und mit den Kanalenden (13, 14) verbunden sind.

**Revendications**

1. Installation de câbles électriques dans un navire, dans laquelle les câbles s'étendant dans une section (1, 1a, 1b) du navire comprise entre deux cloisons étanches (2, 3) sont regroupés dans des chemins de câbles et les passages du chemin de câble (20) à travers les parois étanches sont fermés de manière étanche à l'eau, caractérisée en ce qu'au moins un chemin de câbles (20) contentant une série de câbles est disposé, entre les cloisons étanches (2, 3) de la section (1), dans un canal en forme d'auge (10) recouvert et reposant sur le double fond, et en ce que des lignes électriques (21, 22, 23) répartie au niveau des cloisons étanches (2, 3) s'étendent vers le haut depuis les extrémités (13, 14) du canal, en direction des machines et des appareils de la section (1).

2. Installation de câbles selon la revendication 1, caractérisée en ce qu'un canal unique en formé d'auge (10) pour le chemin de câbles (20) est à peu près disposé au milieu du navire.

3. Installation de câbles selon la revendication 1 ou 2, caractérisée en ce que sur sa face supérieure, le canal (10) est recouvert de plaques amovibles (12) résistant au choc et au passage d'une personne.

4. Installation de câbles selon l'une des revendications 1 à 3, caractérisée en ce que les sorties de lignes électriques (21, 22, 23) réparties et dérivées sont obturées de manière étanche à l'eau au niveau des extrémités (13, 14) du canal.

5. Installation de câbles selon la revendication 4, caractérisée en ce que les extrémités (14b) du canal sont fermées de manière étanche à l'eau vis-à-vis du canal (10, 10b) au moyen d'une masse de scellement rapportée (18).

6. Installation de câbles selon la revendication 4 ou 5, caractérisée en ce que les côtés du canal (10, 10a) présentent des ouvertures (17).

7. Installation de câbles selon l'une des revendications 1 à 4, caractérisée en ce que le canal (10) ainsi que ses extrémités (13, 14) sont réalisés de manière étanche à l'eau et obturés de manière étanche à l'eau par les plaques amovibles (12).

8. Installation de câbles selon la revendication 7, caractérisée en ce que le canal (10) obturé de manière étanche à l'eau contient au moins un espace creux continu au-dessus des câbles du chemin de câbles (20) ou entre ces câbles, et en ce que des conduites d'air (31, 32) prévues pour faire circuler de l'air dans le canal (10) afin d'évacuer la chaleur émise par les câbles sont disposées au niveau des cloisons étanches (2, 3) et reliées avec les extrémités (13, 14) du canal.

**Claims**

1. Arrangement of electric cables in a ship, wherein the cables, which extend in a section (1, 1a, 1b) of the ship between two bulkhead walls (2, 3), are grouped together in cable runs, and the channels of the cable run (20) are sealed in a water-tight manner by means of the bulkhead walls, characterised in that at least one cable run (20), comprising a plurality of cables, is disposed in a trough-shaped, covered duct (10), which is supported on the double bottom, between the bulkhead walls (2, 3) of the section (1), and lines (21, 22, 23), which are distributed over the bulkhead walls (2, 3), extend upwardly from the duct ends (13, 14) to the machines and apparatus of the section (1).

2. Cable arrangement according to claim 1, characterized in that a single, trough-shaped duct (10) for the cable run (20) is disposed substantially in the centre of the ship.

3. Cable arrangement according to claim 1 or 2, characterissed in that the duct (10) is covered by impact-and tread-resistant, detachable plates (12) at its upper end.

4. Cable arrangement according to one of claims 1 to 3, characterised in that the ends of the branching, distributing lines (21, 22, 23) are sealed in a water-tight manner at the duct ends (13, 14).

5. Cable arrangement according to claim 4, characterised in tha the duct ends (14b) are sealed relative to the duct (10, 10b) in a water-tight manner by means of a sealing compound (18) which is introduced.

6. Cable arrangement according to claim 4 or 5, characterised in that the sides of the duct (10, 10a) are provided with apertures (17).

7. Cable arrangement according to one of claims 1 to 4, characterised in that the duct (10) has a water-tight construction with the duct ends (13, 14) and is sealed in a water-tight manner by means of the detachable plates (12).

8. Cable arrangement according to claim 7, characterised in that the duct (10), which is sealed in a water-tight manner, includes at least one continuously extending cavity above or between the cables of the cable run (20), and air lines (31, 32) for a circulation of air through the duct (10) in order to eliminate heat from the cables are disposed on the bulkhead walls (2, 3) and connected to the duct ends (13, 14).

FIG. 1

FIG. 2

FIG. 3